# EUROPEAN PATENT SPECIFICATION

(11) **EP 2 517 336 B1**
(45) Date of publication and mention of the grant of the patent: **04.03.2015**
(21) Application number: 10793237.8
(22) Date of filing: 16.12.2010
(51) Int. Cl.: H02K 3/38

(54) **A HERMETIC COMPRESSOR COMPRISING A CONNECTOR**
HERMETISCHER VERDICHTER MIT EINEM STECKVERBINDER
COMPRESSEUR HERMÉTIQUE COMPRENANT UN CONNECTEUR

(30) Priority: 23.12.2009 TR 200909705
(43) Date of publication of application: 31.10.2012
(73) Proprietor: Arçelik Anonim Sirketi, 34950 Istanbul (TR)
(72) Inventor: CETINTURK, Tugba, 34950 Istanbul (TR)
(86) International application number: PCT/EP2010/069843
(87) International publication number: WO 2011/076649

(56) References cited:
- JP-A- 5 308 740
- JP-A- 2005 264 749
- US-A- 3 912 957

## Description

The present invention relates to a hermetic compressor comprising a connector which provides the electrical connections of the motor thereof to be made.

The stator of the electric motor operating the hermetic compressor is produced by placing windings composed of conducting wires into the slots on the stator stack composed of magnetic sheets and the windings form the parts referred to as winding head by extending towards the outside through the opposite faces of the stator stack. Electrical supply cables are connected between the ends of the outer connection terminal disposed on the stator casing and the stator winding wires for delivering electricity to the stator windings. In the state of the art, connectors produced from plastic material and placed on the stator stack are used to connect the electrical supply cables and the ends of the stator winding wires to each other. Connectors provide the electrical supply cables and the stator winding wires to be connected one another in a secure manner, it is provided that the electrical supply cables cannot be removed from the connector when being pulled in the detachment direction thereof from the stator; however, in order that connectors provide sufficient strength, the size thereof is required to be increased, and the connectors cause problems in the production of the hermetic compressor since they occupies more space on the stator stack.

In European Patent Application No. EP1619771, a connector device is explained which provides electrical connections to be made to the windings of the electric motor stator located on a hermetic compressor, which has plurality of oblong cavities thereon, wherein the ends of the wires of the coils and the ends of the wires for the power supply are housed. In Japanese Patent Application No. JP2005264749A, an electric compressor has an electric element and a compression element enclosed in a sealed container, and connects lead wires connected to a terminal mounted to the sealed container and connected to an external power source, to motor leader lines connected to a stator coil of the electric element, through connection parts to supply electricity to the electric element.

The hermetic compressor realized in order to attain the aim of the present invention, and explicated in the first claim and the respective claims thereof comprises a stator having main and auxiliary windings formed by winding the conducting wires around the slots on the stator stack and a connector produced from thin and bendable plastic strip is fixed by being wound around the portion of the stator windings protruding from the planar surface of the stator stack and called winding head.

The connector consists of a strip and three insulating tubes located at the end of the strip that protrudes to the outside of the winding head, produced as a single piece with the strip, arranged side by side and surrounding and insulating the said electrical connections by placing the cable end-winding end connections therein.

In an embodiment of the present invention, the connector is produced from heat shrink material, when the connector is heated after being connected to the winding head, the strip part adheres to the winding head around which it is wound and the insulating tubes to the connections wherein the cable and wire ends are joined by shrinking due to heat.

In another embodiment of the present invention, the connector comprises a locking extension located at one end of the strip and a locking hole which provides the strip to be connected to the winding head by being inserted therethrough after being wound around the winding head.In another embodiment of the present invention, slots are disposed on the insulating tubes of the connector, which longitudinally open on the insulating tubes and which divide the insulating tubes into two arms and which provide the cable end-winding end connections to be easily placed into the insulating tubes. In this embodiment, furthermore, lids are located on the insulating tubes, which extend from one of the arms on both sides of the insulating tube separated by the slot to the other and which cover the slots after the cable end-winding end connections are placed into the insulating tubes by being inserted through the slots.

In the hermetic compressor of the present invention, the connector in strip form used to make the electrical connections of the stator occupies much less space of the stator stack compared to the known embodiments, thus the production of the compressor is facilitated.

Moreover, the connector prevents the cables from contacting the other elements in the compressor by holding the cables together outside the stator, using elements such as cable retainer sleeve (macaron) for holding the cables together is not required.

The hermetic compressor realized in order to attain the aim of the present invention is illustrated in the attached figures, where:

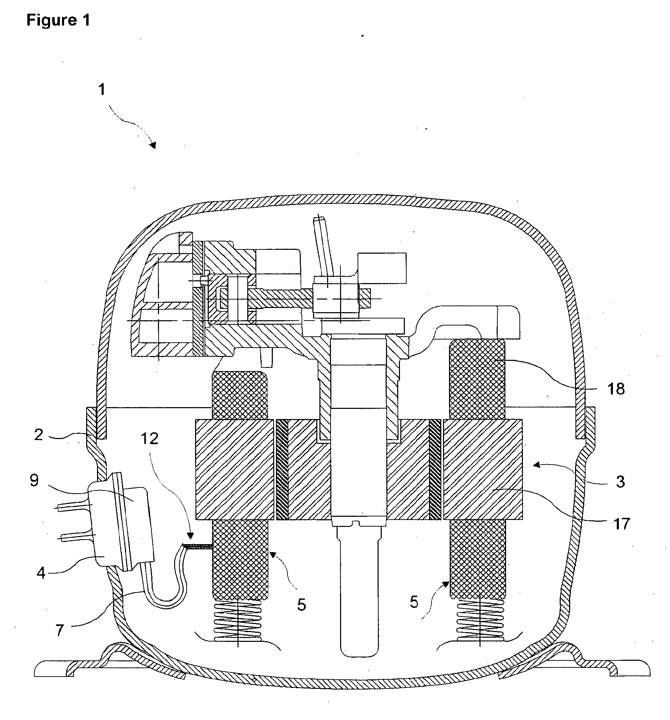

Figure 1 - is the cross sectional view of a hermetic compressor.
Figure 2 - is the perspective view of a connector.
Figure 3 - is the view of detail A of the connector in Figure 2.
Figure 4 - is the perspective view of a stator on which a connector is fixed.
Figure 5 - is the schematic view of a cable end-winding end connection.

The elements illustrated in the figures are numbered as follows:
1. Compressor
2. Casing
3. Stator
4. Terminal
5. Winding head
6. Winding end
7. Cable
8. Cable end
9. Plug
10. Strip
11. Insulating tube
12. Connector
13. Locking extension
14. Locking hole
15. Slot
16. Lid
17. Stator stack
18. Winding

The hermetic compressor (1) suitable for being used in cooling devices such as refrigerators comprising a casing (2), a stator (3) located in the casing (2), having a stator stack (17) composed of laminations and one or more than one winding (18) composed of conducting wires wound on the stator stack (17), a terminal (4) fixed to the casing (2) providing the electrical connection to be made to the outer power source, more than one winding head (5) forming the portions of the windings (18) extending towards outside from the opposite faces of the stator stack (17), more than one winding end (6) extended towards the outside of the winding head (5) providing the electrical connections to be made to the windings (18), more than one cable (7) providing the electric current to be delivered to the windings (18) by extending from the terminal (4) to the stator (3), more than one cable end (8) located on the end of the cables (7) extending to the stator (3) and connected to the winding ends (6), a plug (9) located on the-end of the cables (7) on the casing (2) side providing the cables (7) to be connected to the terminal (4).

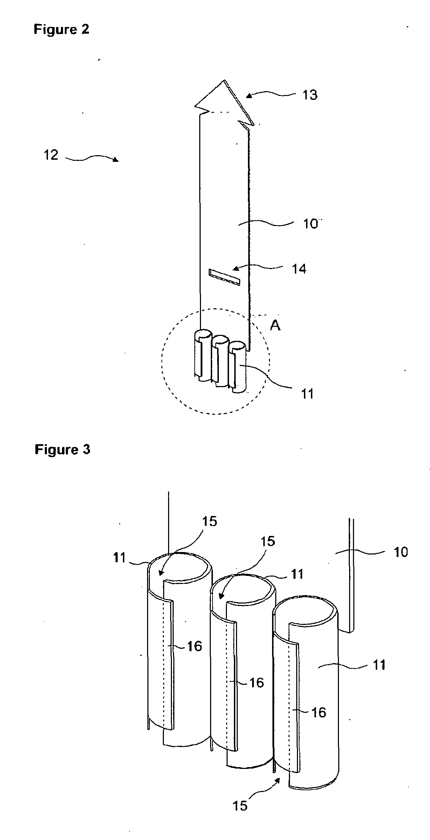

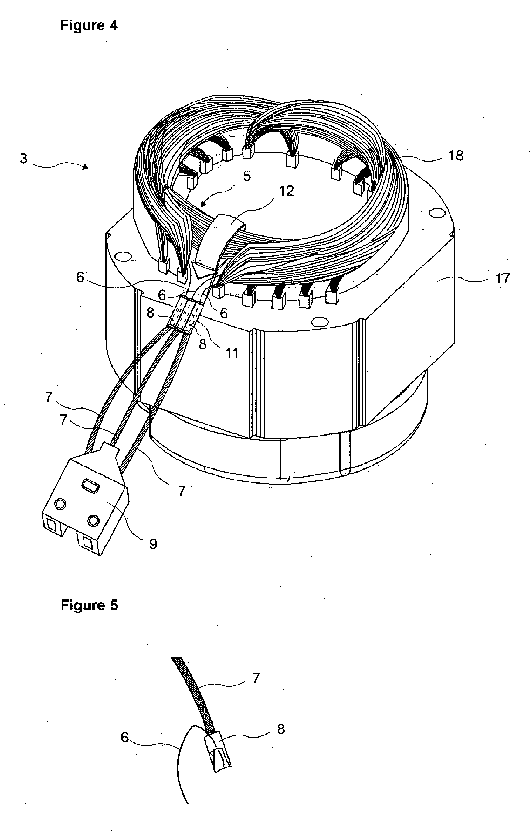

The hermetic compressor (1) of the present invention comprises
- a strip (10) produced from substantially thin and flexible plastic, wound around the winding head (5) and
- a connector (12) having more than one insulating tube (11) positioned side by side on the portion of the strip (10) which are not wound around the winding head (5) and which extend towards the outside from the winding head (5), wherein the cable end (8)-winding end (6) connections are placed and which insulate the cable end (8)-winding end (6) connections by wrapping them (Figure 2, Figure 4).

The hermetic compressor (1) is driven by three phase current, three cables (7) are used, the cables ends (8) are connected to three winding ends (6) and the joined cables ends (8) and winding ends (6) are placed separately into three insulating tubes (11) on the connector (12).

In an embodiment of the present invention, the insulating tubes (11) on the connector (12) and the strip (10) are produced as a single piece.

In another embodiment of the present invention, the connector (12) is produced from heat shrink material.

In another embodiment of the present invention, the connector (12) comprises a locking extension (13) located at one end of the strip (10) and a locking hole (14) located on the strip (10), which provides the strip (10) to be fixed to the winding head (5) by inserting the locking extension (13) therethrough after being wound around the winding head (5) (Figure 2).

In another embodiment of the present invention, the connector (12) comprises more than one slot (15) disposed on the insulating tubes (11), formed by cutting the insulating tubes (11) longitudinally, dividing the insulating tubes (11) into two arms and providing the cable end (8)-winding end (6) connections to be easily placed into the insulating tubes (11) (Figure 3).

In the above embodiment, the connector (12) furthermore comprises more than one lid (16) extending from one of the arms on both sides of the insulating tube (11) separated by the slot (15) to the other, covering the slots (15) after the cable end (8)-winding end (6) connections are placed into the insulating tubes (11) by being inserted through the slots (15) and thus providing the insulating tubes (11) to completely surround the cable end (8)-winding end (6) connections (Figure 3).

When the electrical connections of the compressor (1) of the present invention are made during the production phase, the strip (10) is wound around the winding head (5) such that the insulating tubes (11) are over the stator stack (17) and the locking extension (13) is fixed to the winding head (5) like a clamp by being inserted through the locking hole (14). After being joined, the cable ends (8) and the winding ends (6) are placed into the insulating tubes (11) by being inserted through the slots (15) and insulation is provided by the lids (16) closing over the slots (15). Afterwards, the connector (12) is heated, for example in an oven, together with the stator (3) on which the connector (12) is mounted, the strip (10) shrinks and adheres around the winding head (5), and the insulating tubes (11) shrinks and adheres on the cable end (8)-winding end (6) connections therein due to heat. Thus the strip (10) of the connector (12) completely contacts to the winding head (5) and the insulating tubes (11) to the cable end (8)-winding end (6) connections, a strong connection is obtained.

The connector (12) prevents the cables (7) from contacting the stator stack (17), the casing (2) or the other elements in the compressor (1) by holding the cables (7) together outside the stator (3), using elements such as cable (7) retainer sleeve or like is not required for holding the cables (7) together.

The connector (12), furthermore, occupies much less space of the stator stack (17) compared to the known embodiments since it is produced from thin and flexible plastic material, thus the production of the compressor (1) is facilitated and alternative designs are enabled.

It is to be understood that the present invention is not limited by the embodiments disclosed above and a person skilled in the art can easily introduce different embodiments. These should be considered within the scope of the protection postulated by the claims of the present invention.

## Claims

1. A hermetic compressor (1) comprising a casing (2), a stator (3) located in the casing (2), the stator having a stator stack (17) composed of laminations and one or more than one winding (18) composed of conducting wires wound on the stator stack (17), a terminal (4) fixed to the casing (2) for providing electrical connection to an outer power source, more than one winding head (5) formed by the portions of the windings (18) extending outside from the opposite faces of the stator stack (17), more than one winding end (6) extending outside of the winding head (5) and providing the electrical connections to the windings (18), more than one cable (7) providing the electric current to be delivered to the windings (18) by extending from the terminal (4) to the stator (3) and more than one cable end (8), located at the end of the cables (7) extending to the stator (3) and connected to the winding ends (6),
**characterized by** a connector (12) having
- a strip (10) produced from at least substantially thin and flexible plastic, wound around the winding head (5) and
- more than one insulating tube (11), positioned side by side on a portion of the strip (10) which is not wound around the winding head (5) and which extends towards the outside from the winding head (5), the connections of the cable ends (8) with the winding ends (6) being placed in the insulating tubes (11) which insulate the connections of the cable ends (8) with the winding ends (6) by wrapping them.

2. A hermetic compressor (1) as in Claim 1, **characterized by** the connector (12) the insulating tubes (11) and the strip (10) of which are produced as a single piece.

3. A hermetic compressor (1) as in Claim 1 or 2, **characterized by** the connector (12) produced from heat shrink material.

4. A hermetic compressor (1) as in any one of the claims above, **characterized by** the connector (12) comprising a locking extension (13) in arrow form located at one end of the strip (10) and a locking hole (14) located on the strip (10), which provides the strip (10) to be fixed to the winding head (5) by inserting the locking extension (13) therethrough after being wound around the winding head (5).

5. A hermetic compressor (1) as in any one of the claims above, **characterized by** the connector (12) comprising more than one slot (15) disposed on the insulating tubes (11), formed by cutting the insulating tubes (11) longitudinally, dividing the insulating tubes (11) into two arms and providing the cable end (8)-winding end (6) connections to be easily placed into.the insulating tubes (11).

6. A hermetic compressor (1) as in Claim 5, **characterized by** the connector (12) comprising more than one lid (16) extending from one of the arms on both sides of the insulating tube (11) separated by the slot (15) to the other and covering the slots (15) after the cable end (8)-winding end (6) connections are placed into the insulating tubes (11) by being inserted through the slots (15).

## Patentansprüche

1. Hermetischer Kompressor (1), umfassend ein Gehäuse (2), einen Stator (3), der im Gehäuse (2) angeordnet ist, wobei der Stator einen Statorstapel (17) aus Laminierungen und einer oder mehreren Wicklungen (18) aufweist, die aus leitfähigen Drähten gebildet sind, die um den Statorstapel (17) gewunden sind, einen Anschluss (4), der am Gehäuse (2) befestigt ist, um eine elektrische Verbindung zu einer äußeren Stromquelle bereitzustellen, mehrere Wicklungsköpfe (5), die durch die Abschnitte der Wicklungen (18) gebildet sind, die sich von den gegenüberliegenden Flächen des Statorstapels (17) nach außen erstrecken, mehrere Wicklungsenden (6), die sich aus dem Wicklungskopf (5) heraus erstrecken und die elektrischen Verbindungen zu den Wicklungen (18) bereitstellen, mehrere Kabel (7), die es ermöglichen, dass elektrischer Strom an die Wicklungen (18) geleitet wird, indem sie sich vom Anschluss (4) zum Stator (3) erstrecken, und mehrere Kabelenden (8), die am Ende der Kabel angeordnet sind (7), die sich zum Stator (3) erstrecken, und mit den Wicklungsenden (6) verbunden sind,
**gekennzeichnet durch** einen Verbinder (12) aufweisend
- einen Streifen (10), der wenigstens aus im Wesentlichem dünnem und flexiblem Kunststoff hergestellt ist und um den Wicklungskopf (5) gewunden ist, und
- mehrere Isolationsröhren (11), die Seite an Seite an einem Abschnitt des Streifens (10) angeordnet sind, der nicht um den Wicklungskopf (5) gewunden ist, und sich vom Wicklungskopf (5) nach außen erstrecken, wobei die Verbindungen der Kabelenden (8) mit den Wicklungsenden (6) in den Isolationsröhren (11) angeordnet sind, die die Verbindungen der Kabelenden (8) mit den Wicklungsenden (6) **durch** Umhüllen derselben isolieren.

2. Hermetischer Kompressor (1) nach Anspruch 1, **dadurch gekennzeichnet, dass** die Isolationsröhren (11) und der Streifen (10) des Verbinders (12) einstückig hergestellt sind.

3. Kühlvorrichtung (1) nach Anspruch 1 oder 2, **dadurch gekennzeichnet, dass** der Auslöser (12) aus einem transparenten Material hergestellt ist.

4. Hermetischer Kompressor (1) nach einem der vorangehenden Ansprüche, **dadurch gekennzeichnet, dass** der Verbinder (12) eine Verriegelungsverlängerung (13) in Pfeilform umfasst, die an einem Ende des Streifens (10) angeordnet ist, und eine Verriegelungsöffnung (14), die am Streifen (10) angeordnet ist und es ermöglicht, dass der Streifen (10) am Wicklungskopf (5) befestigt wird, indem die Verriegelungsverlängerung (13) nach dem Winden um den Wicklungskopf (5) durch sie hindurchgeführt wird.

5. Hermetischer Kompressor (1) nach einem der vorangehenden Ansprüche, **dadurch gekennzeichnet, dass** der Verbinder (12) mehrere Schlitze (15) umfasst, die an den Isolationsröhren (11) angeordnet sind und durch Schneiden der Isolationsröhren (11) in Längsrichtung gebildet sind und die Isolationsröhren (11) in zwei Arme teilen und es ermöglichen, dass die Verbindungen zwischen Kabelende (8) und Wicklungsende (6) ohne Schwierigkeit in den Isolationsröhren (11) angeordnet werden können.

6. Hermetischer Kompressor (1) nach Anspruch 5, **dadurch gekennzeichnet, dass** der Verbinder (12) mehr als einen Deckel (16) umfasst, der sich von einem der Arme auf beiden Seiten der Isolationsröhre (11), die durch den Schlitz (15) geteilt ist, zu der anderen erstreckt und die Schlitze (15) nach dem Anordnen der Verbindungen zwischen Kabelende (8) und Wicklungsende (6) in den Isolationsröhren (11) mittels Einführen durch die Schlitze (15) abdeckt.

## Revendications

1. Un compresseur hermétique (1) comprenant un corps (2), un stator (3) situé dans le corps (2), le stator présentant un empilement de stator (17) composé de feuilletages et un ou plusieurs enroulements (18) composés de fils conducteurs sur l'empilement de stator (17), une borne (4) fixée au corps (2) pour assurer la connexion électrique à une source d'alimentation externe, plus d'une tête d'enroulement (5) formée par les parties des enroulements (18) s'étendant vers l'extérieur à partir des faces opposées de l'empilement de stator (17), plus d'une extrémité d'enroulement (6) s'étendant vers l'extérieur à partir de la tête d'enroulement (5) et assurant la connexion électrique aux enroulements (18), plus d'un câble (7) permettant la livraison du courant électrique aux enroulements (18) en s'étendant à partir de la borne (4) au stator (3) et plus d'une extrémité de câble (8) qui est situé aux extrémités des câbles (7) s'étendant au stator (3) et qui est relié aux extrémités d'enroulement (6),
**caractérisé par** un connecteur (12) présentant
- une bande (10) produite d'au moins un plastic sensiblement mince et flexible, enroulée autour de la tête d'enroulement (5) et
- plus d'un tube isolant (11) qui est positionné côte à côte sur une partie de la bande (10) qui n'est pas enroulé autour de la tête d'enroulement (5) et qui s'étend vers l'extérieur à partir de la tête d'enroulement (5), les connexions des extrémités de câble (8) avec les extrémités d'enroulement (6) étant placées dans les tubes isolants (11) qui isolent les connexions des extrémités de câble (8) avec les extrémités d'enroulement (6) en les entourant.

2. Un compresseur hermétique (1) selon la Revendication 1, **caractérisé par** le connecteur (12) dont les tubes isolants (11) et la bande (10) sont produits en une seule pièce.

3. Un compresseur hermétique (1) selon la Revendication 1 ou 2, **caractérisé par** le connecteur (12) produit d'un matériau thermorétractable.

4. Un compresseur hermétique (1) selon l'une quelconque des revendications précédentes, **caractérisé par** le connecteur (12) comprenant une extension de verrouillage (13) en forme de flèche situé à une extrémité de la bande (10) et un trou de verrouillage (14) qui est situé sur la bande (10), qui permet la fixation de la bande (10) à la tête d'enroulement (5) par l'insertion de l'extension de verrouillage (13) à travers cela après avoir été enroulée autour de la tête d'enroulement (5).

5. Un compresseur hermétique (1) selon l'une quelconque des revendications précédentes, **caractérisé par** le connecteur (12) comprenant plus d'une fente (15) qui est disposée sur les tubes isolants (11), qui est formée en coupant les tubes isolants (11) longitudinalement, qui divise les tubes isolants (11) en deux bras and permet les connexions l'extrémité de câble (8)-l'extrémité d'enroulement (6) d'être placées facilement dans les tubes isolants (11).

6. Un compresseur hermétique (1) selon la Revendication 5, **caractérisé par** le connecteur (12) comprenant plus d'un couvercle (16) qui s'étend à partir d'un des bras sur les deux côtés du tube isolant (11) séparés par la fente (15) vers l'autre et qui recouvre les fentes (15) après que les connexions l'extrémité de câble (8)-l'extrémité d'enroulement (6) sont placées dans les tubes isolants (11) en étant insérées à travers les fentes (15).
